# FASCICULE DE BREVET EUROPEEN

(11) **EP 0 561 716 B1**
(45) Date de publication et mention de la délivrance du brevet: **06.10.1999**
(21) Numéro de dépôt: 93420090.8
(22) Date de dépôt: 26.02.1993
(51) Int. Cl.: C08G 63/688, C08G 63/82

(54) **Procédé de préparation de polyester à groupement oxysulfonyle**
Verfahren zur Herstellung von Polyester mit Oxysulfonylgruppen
Process for the preparation of polyester containing oxysulphonyl groups

(30) Priorité: 18.03.1992 FR 9203480
(43) Date de publication de la demande: 22.09.1993
(73) Titulaire: TORAY PLASTICS EUROPE SA, 01701 Saint-Maurice de-Beynost (FR)
(72) Inventeur: Assante, Jean-Pierre, F-69100 Villeurbanne (FR); Fleury, Etienne, F-69540 Irigny (FR); Veyrat, Didier, F-69450 Saint-Cyr-au-Mont-d'Or (FR)
(74) Mandataire: Kügele, Bernhard

(56) Documents cités:
- EP-A- 0 129 674
- DE-A- 2 705 230
- FR-A- 2 628 359
- US-A- 3 962 189
- US-A- 4 499 262
- PATENT ABSTRACTS OF JAPAN vol. 10, no. 383 (C-393)(2440) 23 Décembre 1986

## Description

La présente invention concerne un nouveau procédé de préparation de polyesters à groupement oxysulfonyle.

Il est connu d'utiliser des films polyester composites orientés pour certaines applications dans lesquelles les films polyesters orientés simples ne conviennent pas.

Ces films polyesters composites sont constitués notamment par des films de polytéréphtalate d'éthylène orientés biaxialement comportant sur une de leurs faces ou sur les deux faces une couche d'un revêtement adapté à chaque type d'application.

Ainsi il a été décrit dans les brevets US-A- 3 563 942 et US-A-3 779 993, des copolyesters hydrosolubles ou hydrodispersables qui, appliqués comme couches de promoteur d'adhérence, doivent améliorer l'adhérence des couches photosensibles sur les films de polytéréphtalate d'éthylène.

Dans le brevet EP-A-0 129 674, on a proposé le dépôt par enduction de copolyesters à groupements oxysulfonyle particuliers pour permettre l'obtention de films polyesters composites à adhérence améliorée.

Le brevet FR-A-2 628 3 59 décrit la préparation de films polyesters composites orientés,à adhérence améliorée, par extrusion simultanée d'un polyester cristallisable tel que le polytéréphtalate d'éthylène et d'un copolyester à groupement oxysulfonyle comportant des motifs provenant de diacides aromatiques et aliphatiques, d'un acide aromatique à groupement oxysulfonyle et de glycols.

Les copolyesters à groupement oxysulfonyle sont préparés dans le brevet EP-A-0129 674 par réaction, à une température allant jusqu'à 290°C, des esters des divers acides carboxyliques et du glycol, en présence d'acétate de manganèse et de trioxyde d'antimoines comme catalyseurs.

A cette température la polycondensation s'effectue, mais on observe une perte de motifs provenant du diacide aliphatique.Ce phénomène a également été décrit dans Journal of the Chemical Society (1952) pages 2633 à 2637.

Si l'on opère à une température plus faible, on se heurte à un problème de cinétique de polycondensation et on observe l'obtention de copolyesters à masses molaires trop faibles.

Les copolyesters à groupement oxysulfonyle peuvent également être préparés en utilisant un alcoxyde de titane comme catalyseur. La polycondensation est rapide, mais on observe l'apparition d'une coloration rose ou rouge qui peut être gênante pour certaines applications ; en outre le copolyester ainsi préparé a tendance à se dégrader.

La présente invention se propose de résoudre le problème de la préparation de copolyesters à groupement oxysulfonyle dans des conditions telles que la réaction de polycondensation soit suffisante pour permettre l'obtention de masses molaires souhaitées, sans pour autant avoir de perte importante de motifs dérivant du diacide aliphatique et sans apparition de coloration gênante.

Plus précisément l'invention concerne un procédé de préparation d'un copolyester à groupements oxysulfonyle, comprenant une pluralité de motifs récurrents dérivant d'au moins un diacide aliphatique, d'au moins un diacide aromatique à groupement oxysulfonyle, éventuellement d'au moins un diacide aromatique, et d'au moins un diol, caractérisé en ce que la polycondensation de diesters d'alkyle inférieur des diacides précédents et du diol est réalisée en présence d'un système catalytique comprenant au moins un composé du titane et au moins un carboxylate de manganèse, et exempt de composés de l'antimoine.

On utilise dans le présent procédé de préférence les composés organiques du titane, qui sont principalement des alcoxydes de titane dérivant de préférence d'alcanols ayant 1 à 6 atomes de carbone ou d'alcanolamines ayant 2 à 12 atomes de carbone et plus préférentiellement d'alcanols ayant 2 à 4 atomes de carbone ou d'alcanolamines ayant 4 à 9 atomes de carbone.

A titre d'exemples non limitatifs de tels composés organiques du titane, on peut citer le titanate de tétrabutyle, le titanate de nitrile-2,2',2"-triéthyle (ou aminotriéthanolate de titane).

Les carboxylates de manganèse sont essentiellement des carboxylates aliphatiques ayant de préférence 1 à 6 atomes de carbone.

Le plus couramment utilisé est l'acétate de manganèse.

La quantité de composé du titane est exprimée en poids de titane par rapport au poids total des diacides et diol mis en oeuvre.

Cette quantité est généralement de 0,0002 % à 0,0030 % de titane.

De préférence cette quantité sera de 0,0005 % à 0,0025 % de titane.

La quantité de carboxylate de manganèse est exprimée en poids de manganèse par rapport au poids total des diacides et de diols mis en oeuvre.

Cette quantité correspond généralement à 0,0020 % à 0,0100 % de manganèse et de préférence de 0,0030 % à 0,0060 %.

A ces catalyseurs utilisés dans le procédé de l'invention, peuvent être favorablement associés d'autres composés.

Ainsi, il est avantageux de mettre en oeuvre le procédé en présence d'un carboxylate de sodium, de préférence l'acétate de sodium, qui permet de diminuer la formation de motifs diéthylèneglycol dans le copolyester, ce qui est recherché pour certaines applications des copolyesters à groupement oxysulfonyle.

Le carboxylate de sodium, exprimé en poids de sodium par rapport au poids total des diacides et diol mis en oeuvre, représente de 0 à 0,0500 % et de préférence de 0,0050 % à 0,0200 %.

La température à laquelle est conduit le procédé doit permettre une réaction suffisamment rapide, sans pour autant entraîner une dégradation ou une perte importante de certains motifs du copolyester.

Compte-tenu de ces impératifs et en utilisant les quantités convenables de catalyseurs, dans les zones de valeurs indiquées précédemment, la température à laquelle est opérée la réaction est généralement de 200°C à 280°C et préférentiellement de 220°C à 260°C.

La durée de la réaction est essentiellement variable selon la quantité des catalyseurs, la température et les autres paramètres classiques de ce type de réaction.

Elle peut, à titre indicatif, varier de quelques heures à 24 heures environ. De manière habituelle elle se situe entre 5 heures et 10 heures sans que ces valeurs aient un caractère critique.

Les diacides aromatiques qui peuvent être utilisés dans le procédé de l'invention présentent la formule générale (I) :

HOOC - Ar - COOH (I)

dans laquelle Ar représente un radical phénylène, comportant éventuellement un ou plusieurs substituants tels que radical alkyle ayant 1 à 4 atomes de carbone, atome d'halogène ou radical OH, ou une combinaison de plusieurs radicaux phényle ortho- ou péricondensés ou de plusieurs radicaux phényle liés entre eux par des groupes inertes tels que lien valentiel simple, radical alkylène, groupe éther, groupe cétone ou groupe sulfone.

A titre d'exemples de tels diacides aromatiques, on peut citer l'acide isophtalique, l'acide téréphtalique, l'acide orthophtalique, l'acide naphtalène-1,2-dicarboxylique, l'acide naphtalène-1,4-dicarboxylique, l'acide naphtalène-1,5-dicarboxylique, l'acide naphtalène-1,6-dicarboxylique, l'acide naphtalène-1,7-dicarboxylique, l'acide naphtalène-1,8-dicarboxylique, l'acide naphtalène-2,3-dicarboxylique, l'acide naphtalène-2,6-dicarboxylique, l'acide naphtalène-2,7-dicarboxylique.

Le diacide aromatique utilisé le plus souvent est l'acide téréphtalique.

Les diacides aromatiques sont mis en oeuvre sous la forme de leurs esters d'alkyle inférieur, c'est-à-dire d'alkyle de 1 à 4 atomes de carbone et de préférence de leurs esters diméthyliques.

Les diacides aromatiques à groupement oxysulfonyle utilisés dans le présent procédé répondent à la formule générale (II) : 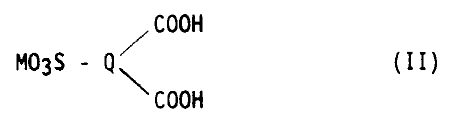 dans laquelle :
- M représente un atome d'hydrogène, de sodium, de lithium ou de potassium,
- Q représente un radical phénylène ou une combinaison de plusieurs radicaux phényle ortho- ou péricondensés ou de plusieurs radicaux phényle liés entre eux par des groupes inertes tels que lien valentiel simple, radical alkylène, groupe éther, groupe cétone ou groupe sulfone.

Comme exemples spécifiques d'acides dicarboxyliques à groupes oxysulfonyle, on peut citer les acides hydroxysulfonyltéréphtaliques ; hydroxysulfonylisophtaliques (en particulier l'acide sulfo-5 isophtalique) hydroxysulfonylorthophtaliques ; hydroxysulfonyl-4 naphtalènedicarboxylique-2,7 ; hydroxysulfonyldiphényl-dicarboxylique-4,4'; les hydroxysulfonyl dihydroxycarbonyl-4,4' diphénylsulfones ; les hydroxysulfonyldihydroxycarbonyl-4,4' diphénylméthanes ; l'acide (hydroxysulfonylphénoxy)-5 isophtalique ; l'acide (hydroxysulfonylpropoxy)-5 isophtalique.

L'acide sulfo-5 isophtalique est particulièrement préféré.

Les diacides aromatiques à groupement oxysulfonyle sont mis en oeuvre sous la forme de leurs esters d'alkyle inférieur et on utilise de préférence leurs esters diméthyliques.

Le groupe acide sulfonique est de préférence sous forme de sel alcalin et plus particulièrement de sel de sodium.

Les diacides aliphatiques utilisés sont plus particulièrement les diacides saturés ayant de 3 à 12 atomes de carbone.

Comme diacides aliphatiques mis en oeuvre dans le procédé, on peut citer à titre non limitatif les acides adipique, succinique, sébacique, azélaïque, glutarique ou subérique. Ces acides sont mis en oeuvre sous forme de leurs esters d'alkyle inférieur et de préférence de leurs esters diméthyliques. On pourrait, sans sortir du cadre de l'invention, associer plusieurs diacides aliphatiques pour préparer les copolyesters à groupes oxysulfonyle.

L'acide adipique est le diacide aliphatique préféré dans le procédé de l'invention.

Les diols, auxquels il est fait appel dans le présent procédé, sont ceux généralement utilisés pour la préparation des polyesters. On fait appel de préférence à des diols aliphatiques saturés comportant de 2 à 4 atomes de carbone comme l'éthylèneglycol, le propylène glycol ou le butanediol-1,4. Ces diols peuvent être utilisés seuls ou en mélanges entre eux ou avec des diols plus fortement condensés en carbone tels que le diméthyl-2,2 propanediol-1,3 ; l'hexanediol-1,6 ; le cyclohexanediméthanol. Dans ce dernier cas, la quantité de diol de condensation en carbone supérieure ou égale à 5 est choisie de façon à ne pas augmenter l'aptitude à la cristallisation du copolyester sous l'influence des solvants ; cette quantité dépend de la condensation en carbone et de la structure du diol considéré.

De même il est préférable, dans le cas de l'utilisation de ces copolyesters à groupement oxysulfonyle pour la préparation de films composites orientés à adhérence améliorée, comme ceux qui sont décrits dans FR-A-2 628 359, d'éviter ou de limiter la présence dans la structure du copolyester sulfoné de motifs récurrents dérivés de polyoxyalkylèneglycols, tels que le diéthylèneglycol, le triéthylèneglycol, le pentaéthylèneglycol, le décaéthylèneglycol. Ainsi la teneur pondérale en polyoxyalkylèneglycol du copolyester est alors de préférence inférieure ou égale à 6 % et plus préférentiellement encore à 5 %.

Dans le présent procédé de préparation des copolyesters à groupement oxysulfonyle, on fait appel de préférence à l'éthylèneglycol qui peut être associé, le cas échéant, à une quantité mineure d'au moins un des diols précités.

Les proportions molaires des différents réactifs utilisés dans le procédé de l'invention se situent généralement dans les zones de valeurs suivantes.

Le ou les diesters d'alkyle inférieur des diacides aromatiques représentent généralement de 0 % à 95 % en moles par rapport à l'ensemble des diesters mis en oeuvre et de préférence de 65 % à 93 %.

Le ou les diesters d'alkyle inférieur des diacides aliphatiques représentent généralement de 4 % à 99 % en moles par rapport à l'ensemble des diesters mis en oeuvre et de préférence de 5 % à 25 %.

Le ou les diesters d'alkyle inférieur des diacides aromatiques à groupement oxysulfonyle représentent généralement de 1 % à 30 % en moles par rapport à l'ensemble des diesters mis en oeuvre et de préférence de 2 % à 10 %.

Le rapport molaire diols/diesters est généralement compris entre 1,5 et 2,5 et de préférence entre 1,8 et 2,1 .

Les copolyesters sulfonés obtenus par le procédé de l'invention peuvent notamment être utilisés pour préparer des films composites par coextrusion.Cela implique qu'ils possèdent une excellente stabilité thermique et thermo-oxydante.

Le système catalytique utilisé permet d'avoir une telle stabilité thermique, cependant il s'avère parfois nécessaire d'améliorer la stabilité thermo-oxydante.

Cette amélioration peut être obtenue par l'adjonction d'un antioxydant phénolique pendant la préparation du copolyester.Les antioxydants phénoliques sont des adjuvants très connus des polymères.Ce sont notamment des monophénols alkylés, les hydroquinones alkylées, les sulfures de diphényle hydroxylés, les alkylidènes-bis-phénols, les dérivés benzyliques, les acylamino-phénols, les esters de l'acide (ditertiobutyl-3,5 hydroxy-4 phényl)-3 propionique, les esters de l'acide (tertiobutyl-5 hydroxy-4 méthyl-3 phényl)-3 propionique, les esters de l'acide (dicyclohexyl-3,5 hydroxy-4 phényl)-3 propionique, les amides de l'acide (ditertiobutyl-3,5 hydroxy-4 phényl)-3 propionique.

Comme exemples non limitatifs d'antioxydants commerciaux très répandus que l'on peut utiliser dans le procédé de l'invention, on peut citer le tétrakis(4-hydroxy-3,5-ditertiobutyl-phényl)-3 proprionate de pentaérythrityle (commercialisé sous la marque IRGANOX 1010), le (4-hydroxy-3,5-ditertiobutyl-benzyl) phosphonate de diéthyle (commercialisé sous la marque IRGANOX 1222), le (4'-hydroxy, 4-hydroxy-3,5-ditertiobutyl) diphénylméthane (commercialisé sous la marque IRGANOX 1330).

Les exemples qui suivent illustrent l'invention.

### EXEMPLES 1 A 4 ET ESSAIS COMPARATIFS 1 ET 2 :

Dans un réacteur en acier inoxydable de 7,5 l, muni d'un agitateur à ancre, d'une double enveloppe pour la circulation d'un liquide caloporteur et d'une colonne de distillation régulée par une électrovanne, on introduit à froid :
- 2861 g (14,733 mol) de téréphtalate de diméthyle
- 287 g ( 1,703 mol) d'adipate de diméthyle
- 177 g ( 0,596 mol) d'isophtalate de diméthyle-5-sulfonate de sodium
- 2112 g (34,064 mol) d'éthylène-glycol
- Catalyseurs : les quantités des différents catalyseurs (exprimées en % poids/poids de métal Ti, Mn, Na, Sb, par rapport à la totalité des réactifs) sont indiquées dans le tableau I ci-après ; les catalyseurs utilisés sont :
   * aminotriéthanolate de titane
   * acétate de manganèse
   * acétate de sodium
   * trioxyde d'antimoine
- acide phosphorique : exprimé en % poids/poids de phosphore par rapport à la totalité des réactifs
- antioxydant phénolique IRGANOX 1330 : en % poids/poids par rapport à la totalité des réactifs (introduit lorsque la température atteint 240°C).

L'agitation est mise en marche, puis le contenu du réacteur est chauffé rapidement à 180°C, température à laquelle le méthanol commence à distiller. La température dans le mélange réactionnel est montée à 220°C en environ 2h 30. L'excès d'éthylène-glycol est distillé entre 220°C et 240°C. A 240°C l'antioxydant phénolique est ajouté le cas échéant.

Le mélange réactionnel est ensuite transféré dans un autoclave chauffé à 250°C. La pression dans l'autoclave est réduite à environ 70 Pa. La polycondensation est poursuivie pendant la durée indiquée dans le tableau I. Ensuite la pression dans l'autoclave est ramenée à la pression atmosphérique par introduction d'azote, puis le copolyester fondu est soutiré sous une roue de coulée et est granulé.

Le copolyester obtenu fait l'objet des déterminations suivantes :
- observation de sa couleur
- mesure de son indice de viscosité (IV) en solution à 1 % en poids dans l'orthochlorophénol à 25°C
- dosage des motifs diéthylène-glycol (DEG) par chromatographie gazeuse après saponification du copolyester : en % poids/poids par rapport à l'ensemble des motifs glycol
- mesure de la masse molaire en nombre (MMn) mesurée à 80°C dans la N-méthylpyrrolidone
- mesure de la viscosité apparente à 280°C, au temps 0 et après 30 min : mesure réalisée par rhéométrie capillaire (appareil INSTRON 3211, équipé d'une filière 60/1 mm) ; on indique dans le tableau le pourcentage de diminution de cette viscosité.

Le tableau I ci-après rassemble les caractéristiques des différents essais réalisés.

**TABLEAU I**

| ESSAIS | EXEMPLE 1 | EXEMPLE 2 | EXEMPLE 3 | EXEMPLE 4 | ESSAI COMPARATIF1 | ESSAI COMPARATIF 2 |
|---|---|---|---|---|---|---|
| Ti % | 0,0010 | 0,0020 | 0,0022 | 0,0020 | 0,0054 | 0,0054 |
| Mn % | 0,0054 | 0,0054 | 0,0054 | 0,0054 | 0 | 0 |
| Sb % | 0 | 0 | 0 | 0 | 0,0050 | 0,0365 |
| Na % | 0,0100 | 0,0050 | 0,0100 | 0,0100 | 0,0100 | 0 |
| P % | 0,0037 | 0,0037 | 0,0037 | 0,0037 | 0 | 0 |
| IRGANOX 1330 | 0 | 0,2000 | 0,2000 | 0,2000 | 0 | 0,2000 |
| DUREE POLYCONSATION A 250°C | 1h20 (à 260°C) | 1h40 | 1h20 | 1h20 | 1h10 | 1h10h |
| COULEUR | Blanc | Blanc | Blanc | Blanc | Rouge | Rouge |
| I.V. | 58,0 | 60,9 | 55,0 | 54,3 | 49,0 | 54,5 |
| MMn | 25200 | 27400 | 24700 | 24500 | 20700 | 24000 |
| DEG % | 2,5 | 5,7 | 3,2 | 3,7 | 3,5 | 4,0 |
| Diminution % de la viscosité à 280°C | 28 | 25 | 25 | 25 | 50 | 50 |

On note une beaucoup plus grande tenue thermique des copolyesters préparés selon le procédé de l'invention (exemples 1 à 4) par rapport à des copolyesters préparés différemment (essais comparatifs 1 et 2).

D'autre part les exemples 2 à 4 effectués en présence d'un antioxydant phénolique montrent une résistance plus élevée à la thermo-oxydation que des essais identiques effectués sans antioxydant phénolique.

Le niveau de stabilité thermo-oxydative est apprécié par calorimétrie différentielle à balayage thermique (appareil PERKIN ELMER DSC 7) selon la méthode suivante.

On introduit 10 mg de poudre de copolyester à analyser dans une capsule et le cycle thermique suivant est imposé :
- sous azote (20 cm3/min) : montée à 260°C à 10°C/min, maintien à 260°C pendant 3 min, trempe à 200°C/min jusqu'à 20°C ;
- sous air (40 cm3/min) : montée à 320°C à 10°C/min.

Sur des copolyesters préparés de manière identique, la couleur des granulés obtenus en fin de polymérisation est la même (blanc) avec ou sans antioxydant phénolique.

Par contre après une extrusion sur monovis à 280°C et une regranulation des copolyesters, on observe que le copolyester contenant l'antioxydant est toujours blanc, alors que celui n'en contenant pas est devenu jaune/marron.

## Revendications

1. Procédé de préparation d'un copolyester à groupements oxysulfonyle, comprenant une pluralité de motifs récurrents dérivant d'au moins un diacide aliphatique, d'au moins un diacide aromatique à groupement oxysulfonyle, éventuellement d'au moins un diacide aromatique, et d'au moins un diol, caractérisé en ce que la polycondensation de diesters d'alkyle de 1 à 4 atomes de carbone des diacides précédents et du diol est réalisée en présence d'un système catalytique comprenant au moins un composé du titane et au moins un carboxylate de manganèse, et exempt de composés de l'antimoine.

2. Procédé selon la revendication 1, caractérisé en ce que le composé du titane utilisé est choisi parmi les composés organiques du titane, principalement les alcoxydes de titane dérivant de préférence d'alcanols ayant 1 à 6 atomes de carbone ou d'alcanolamines ayant 2 à 12 atomes de carbone et plus préférentiellement d'alcanols ayant 2 à 4 atomes de carbone ou d'alcanolamines ayant 4 à 9 atomes de carbone.

3. Procédé selon la revendication 1, caractérisé en ce que le composé du titane utilisé est choisi parmi le titanate de tétrabutyle, le titanate de nitrile-2,2',2"-triéthyle (ou aminotriéthanolate de titane).

4. Procédé selon la revendication 1, caractérisé en ce que le carboxylate de manganèse est choisi parmi les carboxylates aliphatiques ayant de préférence 1 à 6 atomes de carbone.

5. Procédé selon l'une des revendications 1 à 4, caractérisé en ce que la quantité de composé du titane, exprimée en poids de titane par rapport au poids total des diacides et diol mis en oeuvre, est de 0,0002 % à 0,0030 % de titane et de préférence de 0,0005 % à 0,0025 % de titane.

6. Procédé selon l'une des revendications 1 à 5, caractérisé en ce que la quantité de carboxylate de manganèse, exprimée en poids de manganèse par rapport au poids total des diacides et de diols mis en oeuvre, correspond à 0,0020 % à 0,0100 % de manganèse et de préférence de 0,0030 % à 0,0060 %.

7. Procédé selon l'une des revendications 1 à 6, caractérisé en ce qu'il est mis en oeuvre en présence d'un carboxylate de sodium, de préférence l'acétate de sodium, qui représente en poids de sodium par rapport au poids total des diacides et diol mis en oeuvre, de 0 à 0,0500 % et de préférence de 0,0050 % à 0,0200 %.

8. Procédé selon l'une des revendications 1 à 7, caractérisé en ce que la température à laquelle est opérée la réaction est de 200°C à 280°C et préférentiellement de 220°C à 260°C.

9. Procédé selon l'une des revendications 1 à 8, caractérisé en ce que les diacides aromatiques qui peuvent être utilisés dans le procédé de l'invention présentent la formule générale (I) :
HOOC - Ar - COOH (I)
dans laquelle Ar représente un radical phénylène, comportant éventuellement un ou plusieurs substituants tels que radical alkyle ayant 1 à 4 atomes de carbone, atome d'halogène ou radical OH, ou une combinaison de plusieurs radicaux phényle ortho- ou péricondensés ou de plusieurs radicaux phényle liés entre eux par des groupes inertes tels que lien valentiel simple, radical alkylène, groupe éther, groupe cétone ou groupe sulfone.

10. Procédé selon l'une des revendications 1 à 9, caractérisé en ce que les diacides aromatiques à groupement oxysulfonyle utilisés répondent à la formule générale (II) : 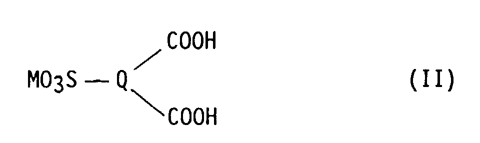 dans laquelle :
- M représente un atome d'hydrogène, de sodium, de lithium ou de potassium,
- Q représente un radical phénylène ou une combinaison de plusieurs radicaux phényle ortho- ou péricondensés ou de plusieurs radicaux phényle liés entre eux par des groupes inertes tels que lien valentiel simple, radical alkylène, groupe éther, groupe cétone ou groupe sulfone.

11. Procédé selon l'une des revendications 1 à 10, caractérisé en ce que le diacide à groupement oxysulfonyle est l'acide sulfo-5 isophtalique dont le groupe acide sulfonique est de préférence sous forme de sel alcalin et plus particulièrement de sel de sodium.

12. Procédé selon l'une des revendications 1 à 11, caractérisé en ce que le diacide aliphatique utilisé est un diacide saturé ayant de 3 à 12 atomes de carbone.

13. Procédé selon l'une des revendications 1 à 12, caractérisé en ce que le diacide aliphatique utilisé est choisi parmi les acides adipique, succinique, sébacique, azélaïque, glutarique ou subérique.

14. Procédé selon l'une des revendications 1 à 13, caractérisé en ce que les diacides aliphatiques,les diacides aromatiques, les diacides aromatiques à groupement oxysulfonyle sont mis en oeuvre sous la forme de leurs esters diméthyliques.

15. Procédé selon l'une des revendications 1 à 14, caractérisé en ce que les diols utilisés sont de préférence des diols aliphatiques saturés comportant de 2 à 4 atomes de carbone comme l'éthylèneglycol, le propylène glycol ou le butanediol-1,4.

16. Procédé selon l'une des revendications 1 à 15, caractérisé en ce que les proportions molaires des différents réactifs utilisés se situent dans les zones de valeurs suivantes:
- le ou les diesters d'alkyle de 1 à 4 atomes de carbone des diacides aromatiques représentent de 0 % à 95 % en moles par rapport à l'ensemble des diesters mis en oeuvre et de préférence de 65 % à 93 %,
- le ou les diesters d'alkyle de 1 à 4 atomes de carbone des diacides aliphatiques représentent de 4 % à 99 % en moles par rapport à l'ensemble des diesters mis en oeuvre et de préférence de 5 % à 25 %,
- le ou les diesters d'alkyle de 1 à 4 atomes de carbone des diacides aromatiques à groupement oxysulfonyle représentent de 1 % à 30 % en moles par rapport à l'ensemble des diesters mis en oeuvre et de préférence de 2 % à 10 %.

17. Procédé selon l'une des revendications 1 à 16, caractérisé en ce que le rapport molaire diols/diesters est compris entre 1,5 et 2,5 et de préférence entre 1,8 et 2,1 .

## Patentansprüche

1. Verfahren zum Herstellen eines Copolyesters mit Oxysulfonylgruppen mit einer Mehrzahl von wiederkehrenden Grundeinheiten, die von wenigstens einem aliphatischen Diacid, mindestens einem aromatischen Diacid mit Oxysulfonylgruppe, gegebenenfalls zumindest einem aromatischen Diacid und wenigstens einem Diol abgeleitet sind, dadurch gekennzeichnet, dass die Polykondensation von Alkyl-Diestern mit 1 bis 4 Kohlenstoffatomen aus den vorherigen Diaciden und dem Diol in Gegenwart eines katalytischen Systems erfolgt, welches mindestens eine Titanverbindung und wenigstens ein Mangancarboxylat aufweist und frei von Antimonverbindungen ist.

2. Verfahren nach Anspruch 1, dadurch gekennzeichnet, dass die verwendete Titanverbindung unter organischen Titanverbindungen ausgewählt ist, und zwar im wesentlichen unter Titan-Alkoxyden, welche vorzugsweise von Alkanolen mit 1 bis 6 Kohlenstoffatomen oder von Alkanolaminen mit 2 bis 12 Kohlenstoffatomen, und noch bevorzugter von Alkanolen mit 2 bis 4 Kohlenstoffatomen oder von Alkanolaminen mit 4 bis 9 Kohlenstoffatomen, abgeleitet sind.

3. Verfahren nach Anspruch 1, dadurch gekennzeichnet, dass die verwendete Titanverbindung unter Tetrabutyltitanat und Nitril-2,2',2"-Triäthyl-Titanat (oder Titan-Aminotriäthanolat) ausgewählt ist.

4. Verfahren nach Anspruch 1, dadurch gekennzeichnet, dass das Mangancarboxylat unter den aliphatischen Carboxylaten ausgewählt ist, welche vorzugsweise 1 bis 6 Kohlenstoffatome besitzen.

5. Verfahren nach einem der Ansprüche 1 bis 4, dadurch gekennzeichnet, dass die Menge der Titanverbindung, ausgedrückt als Gewicht des Titans relativ zum Gesamtgewicht der eingesetzten Diacide und des Diols, 0,0002 % bis 0,0030 % Titan, und vorzugsweise von 0,0005% bis 0,0025% Titan, beträgt.

6. Verfahren nach einem der Ansprüche 1 bis 5, dadurch gekennzeichnet, dass die Menge an Mangancarboxylat, ausgedrückt als Gewicht des Mangans relativ zum Gesamtgewicht der eingesetzten Diacide und des Diols, 0,0020 % bis 0,0100 % Mangan, und vorzugsweise von 0,0030 % bis 0,0060 %, entspricht.

7. Verfahren nach einem der Ansprüche 1 bis 6, dadurch gekennzeichnet, dass es in Gegenwart eines Natriumcarboxylats abläuft, vorzugsweise von Natriumazetat, das ein Gewicht des Natriums relativ zum Gesamtgewicht der eingesetzten Diacide und des Diols von 0 bis 0,0500%, und vorzugsweise von 0,0050% bis 0,0200%, darstellt.

8. Verfahren nach einem der Ansprüche 1 bis 7, dadurch gekennzeichnet, dass die Temperatur, bei welcher die Reaktion durchgeführt wird, 200°C bis 280°C und vorzugsweise 220°C bis 260°C, beträgt.

9. Verfahren nach einem der Ansprüche 1 bis 8, dadurch gekennzeichnet, dass die aromatischen Diacide, welche beim erfindungsgemässen Verfahren verwendet werden können, die allgemeine Formel (I) aufweisen:
HOOC - Ar - COOH (I)
in welcher Ar ein Phenylradikal darstellt, welches gegebenenfalls einen oder mehrere Substituenten aufweist, wie ein Alkylradikal mit 1 bis 4 Kohlenstoffatomen, ein Halogenatom oder ein OH-Radikal, oder aber eine Kombination von mehreren ortho- oder perikondensierten Phenylradikalen oder mehreren Phenylradikalen, die untereinander durch inerte Gruppen, wie einwertige Bindungen, Alkylenradikale, Äthergruppen, Ketongruppen oder Sulfongruppen, verbunden sind.

10. Verfahren nach einem der Ansprüche 1 bis 9, dadurch gekennzeichnet, dass die verwendeten aromatischen Diacide mit Oxysulfonylgruppe der allgemeinen Formel (II) entsprechen : 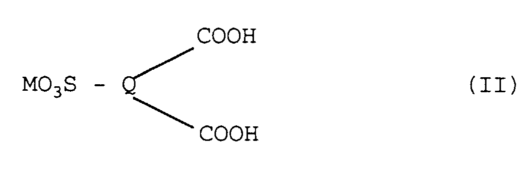 in welcher:
- M ein Wasserstoff-, Natrium-, Lithium- oder Kaliumatom, und
- Q ein Phenylenradikal oder eine Kombination von mehreren ortho- oder perikondensierten Phenylradikalen oder mehreren Phenylradikalen darstellt, die untereinander durch inerte Gruppen, wie einwertige Bindungen, Alkylenradikale, Äthergruppen, Ketongruppen oder Sulfongruppen, verbunden sind.

11. Verfahren nach einem der Ansprüche 1 bis 10, dadurch gekennzeichnet, dass das Diacid mit Oxysulfonylgruppe die Sulfo-5-Isophthalsäure ist, deren Sulfonsäuregruppe vorzugsweise in Form eines Alkalisalzes, und insbesondere eines Natriumsalzes, vorliegt.

12. Verfahren nach einem der Ansprüche 1 bis 11, dadurch gekennzeichnet, dass das verwendete aliphatische Diacid ein gesättigtes Diacid mit 3 bis 12 Kohlenstoffatomen ist.

13. Verfahren nach einem der Ansprüche 1 bis 12, dadurch gekennzeichnet, dass das verwendete aliphatische Diacid unter der Adipinsäure, der Bernsteinsäure, der Sebazinsäure, der Azelainsäure, der Glutarsäure oder der Suberinsäure ausgewählt ist.

14. Verfahren nach einem der Ansprüche 1 bis 13, dadurch gekennzeichnet, dass die aliphatischen Diacide, die aromatischen Diacide bzw. die aromatischen Diacide mit Oxysulfonylgruppe in Form ihrer Dimethylester eingesetzt werden.

15. Verfahren nach einem der Ansprüche 1 bis 14, dadurch gekennzeichnet, dass die verwendeten Diole vorzugsweise gesättigte aliphatische Diole mit 2 bis 4 Kohlenstoffatomen sind, wie Äthylenglykol, Propylenglykol oder Butandiol-1,4.

16. Verfahren nach einem der Ansprüche 1 bis 15, dadurch gekennzeichnet, dass die Molverhältnisse der verschiedenen benutzten Reaktanden in den folgenden Zahlenbereichen liegen:
- der oder die Alkyl-Diester mit 1 bis 4 Kohlenstoffatomen der aromatischen Diacide machen 0 % bis 95 %, vorzugsweise 65 % bis 93 %, in Mol bezüglich der Gesamtheit der eingesetzten Diester aus,
- der oder die Alkyl-Diester mit 1 bis 4 Kohlenstoffatomen der aliphatischen Diacide machen 4 % bis 99 %, und vorzugsweise 5 % bis 25 %, in Mol bezüglich der Gesamtheit der eingesetzten Diester aus,
- der oder die Alkyl-Diester mit 1 bis 4 Kohlenstoffatomen der aromatischen Diacide mit Oxysulfonylgruppen machen 1 % bis 30 %, und vorzugsweise 2 % bis 10 %, in Mol bezüglich der Gesamtheit der eingesetzten Diester aus.

17. Verfahren nach einem der Ansprüche 1 bis 16, dadurch gekennzeichnet, dass das Molverhältnis Diole/Diester zwischen 1,5 und 2,5, und vorzugsweise zwischen 1,8 und 2,1, liegt.

## Claims

1. A process for the preparation of a copolyester containing oxysulfonyl groups, comprising a plurality of recurring units derived from at least one aliphatic diacid, from at least one aromatic diacid containing an oxysulphonyl group, optionally from at least one aromatic diacid, and from at least one diol, characterised in that the polycondensation of C₁-C₄ alkyl diesters of the above diacids and of the diol is carried out in the presence of a catalyst system comprising at least one titanium compound and at least one manganese carboxylate, and free from antimony compounds.

2. The process according to claim 1, characterised in that the titanium compound employed is chosen from organic titanium compounds, principally titanium alkoxides derived preferably from alkanols containing 1 to 6 carbon atoms or alkanolamines containing 2 to 12 carbon atoms and more preferably from alkanols containing 2 to 4 carbon atoms or alkanolamines containing 4 to 9 carbon atoms.

3. The process according to claim 1, characterised in that the titanium compound employed is chosen from tetrabutyl titanate, 2,2',2"-nitrilotriethyl titanate (or titanium aminotriethanolate).

4. The process according to claim 1, characterised in that the manganese carboxylate is chosen from aliphatic carboxylates preferably containing 1 to 6 carbon atoms.

5. The process according to one of claims 1 to 4, characterised in that the quantity of the titanium compound, expressed as weight of titanium relative to the total weight of the diacids and diol used, is from 0.0002 % to 0.0030 % of titanium and preferably from 0.0005 % to 0.0025 % of titanium.

6. The process according to one of claims 1 to 5, characterised in that the quantity of manganese carboxylate, expressed as weight of manganese relative to the total weight of the diacids and diols used, corresponds to 0.0020 % to 0.0100 % of manganese and preferably from 0.0030 % to 0.0060 %.

7. The process according to one of claims 1 to 6, characterised in that it is carried out in the presence of a sodium carboxylate, preferably sodium acetate, which represents, as weight of sodium relative to the total weight of the diacids and diol used, from 0 to 0.0500 % and preferably from 0.0050 % to 0.0200 %.

8. The process according to one of claims 1 to 7, characterised in that the temperature at which the reaction is performed is from 220°C to 280°C and preferentially from 220°C to 260°C.

9. The process according to one of claims 1 to 8, characterised in that the aromatic diacids which can be employed in the process of the invention have the general formula (I) :
HOOC - Ar - COOH (I)
in which Ar denotes a phenylene radical optionally comprising one or more substituents such as an alkyl radical containing 1 to 4 carbon atoms, a halogen atom or an OH radical, or a combination of a number of ortho- or pericondensed phenyl radicals or of a number of phenyl radicals bonded together via inert groups such as a single valency bond, an alklyene radical, an ether group, a ketone group or a sulphone group.

10. The process according to one of claims 1 to 9, characterised in that the aromatic diacids containing an oxysulphonyl group which are employed correspond to the general formula (II) : 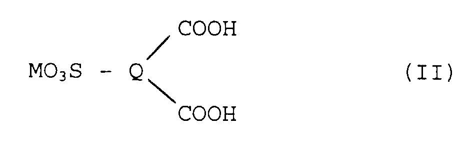 in which :
- M denotes a hydrogen, sodium, lithium or potassium atom,
- Q denotes a phenylene radical or a combination of a number of ortho- or pericondensed phenyl radicals or of a number of phenyl radicals bonded together by inert groups such as a single valency bond, an alkylene radical, an ether group, a ketone group or a sulphone group.

11. The process according to one of claims 1 to 10, characterised in that the diacid containing an oxysulfonyl group is 5-sulfoisophthalic acid in which the sulphonic acid group is preferably in the form of alkali salt and more particularly of sodium salt.

12. The process according to one of claims 1 to 11, characterised in that the aliphatic diacid employed is a saturated diacid containing from 3 to 12 carbon atoms.

13. The process according to one of claims 1 to 12, characterised in that the aliphatic diacid employed is chosen from adipic, succinic, sebacic, azelaic, glutaric or suberic acids.

14. The process according to one of claims 1 to 13, characterised in that the aliphatic diacids, the aromatic diacids, the aromatic diacids containing an oxysulphonyl group are used in the form of their dimethyl esters.

15. The process according to one of claims 1 to 14, characterised in that the diols employed are preferably saturated aliphatic diols containing from 2 to 4 carbon atoms, such as ethylene glycol, propylene glycol or 1,4-butanediol.

16. The process according to one of claims 1 to 15, characterised in that the molar proportions of the different reactants employed lie within the following ranges of values:
- the C₁-C₄ alkyl diester(s) of the aromatic diacids represent from 0 to 95 mol % relative to the total of the diesters used, and preferably from 65 to 93 mol %,
- the C₁-C₄ alkyl diester(s) of the aliphatic diacids represent from 4 to 99 mol % relative to the total of the diesters used, and preferably from 5 to 25 mol %,
- the C₁-C₄ alkyl diester(s) of the aromatic diacids containing an oxysulphonyl group represent from 1 to 30 mol % relative to the total of the diesters used, and preferably from 2 to 10 mol %.

17. The process according to one of claims 1 to 16, characterised in that the diols/diesters molar ratio is comprised between 1.5 and 2.5 and preferably between 1.8 and 2.1.
